Europäisches Patentamt

European Patent Office

Office européen des brevets

(11) Publication number: **0 646 621 A1**

# EUROPEAN PATENT APPLICATION

(21) Application number: **94306181.2**

(22) Date of filing: **22.08.94**

(51) Int. Cl.⁶: **C08K 5/54**, C08K 5/37, C08K 3/36, B60C 1/00, C08L 9/06

(30) Priority: **01.10.93 GB 9320226**
**15.03.94 GB 9404983**

(43) Date of publication of application:
**05.04.95 Bulletin 95/14**

(84) Designated Contracting States:
**DE FR GB**

(71) Applicant: **Sumitomo Rubber Industries Ltd.**
**6-9, 3-chome, Wakinohama-cho,**
**Chuo-ku**
**Kobe-shi,**
**Hyogo 651 (JP)**

(72) Inventor: **Barrett, Gary Terence**
**30 Wrekin Road**
**Kingstanding,**
**Birmingham, B44 8HB (GB)**
Inventor: **Powell, Brian David William**
**13 Rose Way**
**Nuneaton,**
**Warwickshire, CV11 4TL (GB)**

(74) Representative: **Moore, John Hamilton**
**J. H. Moore & Co.,**
**8 Gaiafields Road**
**Lichfield,**
**Staffs. WS13 7LT (GB)**

(54) **Tyre tread.**

(57) The invention relates to a tyre tread and a tyre tread composition particularly suitable for a high performance tyre.

It provides a vulcanisable rubber composition suitable for the manufacture of the tread of a high performance tyre, the composition comprising a styrene-butadiene rubber, oil, vulcanisation agent, filler and coupling agent, the filler comprising silica and the coupling agent being at least bi-functional whereby it can react with the silica and with the rubber polymer.

The invention also provides a tyre having a tread formed by the vulcanisation of such a composition.

EP 0 646 621 A1

This invention relates to a tyre tread and a tyre tread composition and is particularly concerned with a tread for a high performance tyre.

It has been the practice for many years to formulate and compound special rubber compositions for use in the moulding of tyre treads for tyres to be used for a high performance application. Although properties such as rolling resistance and abrasion resistance have some significance for such treads, a property of major importance is grip and particularly grip in wet conditions.

Although much development and research has been expended to improve wet grip of tyre treads, there is still room for further improvement and it is therefore an object of the present invention to provide a tyre tread composition which can be provided to form a tread of improved wet grip.

Accordingly, in one aspect the invention provides a vulcanisable rubber composition suitable for the manufacture of the tread of a high performance tyre, the composition comprising a styrene-butadiene rubber, oil, vulcanisation agent, filler and coupling agent, the filler comprising silica and the coupling agent being at least bi-functional whereby it can react with the silica and with the polymer.

In another aspect the invention provides a high performance tyre having a tread formed from a vulcanised composition of the immediately preceding paragraph.

The reaction between the silica and the coupling agent may take place in situ during the mechanical blending of the ingredients of the composition and/or during the vulcanisation stage or the silica may be pre-coupled with the coupling agent before incorporation into the composition.

Normally, the reaction between the coupling agent and the polymer will be during the vulcanisation stage when the composition is heated to vulcanisation temperature.

The SBR polymer may be emulsion- or solution-polymerised and should preferably contain from 20 to 50 percent, especially from 30-45 per cent, of styrene. It is preferably present in the composition in at least 25% by weight, especially at least 50% by weight, of the rubbery polymer constituent of the composition and may, if desired, be substantially the entire rubbery polymer constituent.

Other rubbers that may be included in the composition with the SBR include any suitable for use in a tyre tread. For example, a vinyl polybutadiene, a vinyl isoprene or a polybutadiene rubber may be included.

The silica should be present in an amount of from 15 up to 160 parts by weight per hundred parts by weight of the rubber and is preferably present in an amount from 30 to 120 parts per hundred of the rubber, e.g. from 30 to 80 parts.

Silica may not be the only filler in the composition and a conventional filler, particularly carbon black, is preferably included to improve abrasion resistance and to colour the composition. The total amount of filler in the composition is preferably from 40 to 160 parts by weight per hundred of the rubber and carbon black is preferably present in an amount of at least 3 parts by weight per hundred of rubber.

The oil in the composition is preferably an aromatic oil and should be present in an amount of at least 40 parts by weight per hundred of rubber. It is particularly preferred that there be at least 60 pphr of the oil and a preferred range is from 60 to 180 parts, especially 80 to 150 parts. Suitable aromatic oils are well known to the average skilled man of the art. Preferably they have a specific gravity of from 0.95 to 1.05.

Where the rubber is an oil-extended rubber, it will be appreciated that the proportions of non-oil ingredients listed herein are with reference to the rubber content without the extender oil. The references to proportions of included oil are to the total oil content, i.e. oil in the extended rubber plus the oil added to the formulation.

The coupling agent is preferably a silane coupling agent, e.g. bis(3-triethoxy-silyl propyl)-tetrasulphide or mercapto propyl triethoxy silane, particularly when the vulcanisation agent is sulphur. In these examples the alkoxy moieties react and couple with the silica and the sulphide moieties react with the rubbery polymer when the composition is vulcanised. Alternatively, the coupling agent may be, for example, a vinyl silane, e.g. vinyl triethoxy silane, or a thiocyanato triethoxy silane, e.g. thiocyanatopropyl-triethoxy silane, or a zirconate coupling agent, e.g. zirconium dineoalkanato di(3-mercapto) propionato-0.

The silica preferably has a surface area of from 60 to 300 $m^2/g$ especially 80 to 250 $m^2/g$, and is preferably a precipitated silica. When precoupled it is treated with the coupling agent prior to its incorporation in the rubber composition by, for example, physical mixing at ambient temperature and then subjecting the mixture to elevated temperature to promote the coupling reaction.

The coupling agent may be used in an amount of from 2 to 20 per cent by weight of the silica filler, e.g. from 2 to 18.5 per cent, preferably from 5 to 15 per cent by weight.

The rubber composition may contain conventional additives, e.g. accelerators, activators, extenders and anti-degradants, as desired. The vulcanisation agent is preferably sulphur or a sulphur-containing compound but any other suitable vulcanisation agent may be used, e.g. phenolic resin or peroxide. The vulcanisation agent may be added to the composition later in the mixing stage after the initial mechanical mixing together of the other ingredients or, preferably, it may be added in a subsequent mixing stage.

The mechanical blending of the composition will normally be carried out at a temperature below 130°C, e.g. as low as 100°C or lower although temperatures from about 100° to 120°C or 125°C may be found advantageous.

Where a pre-coupled silica filler is used, the mechanical blending of the composition may take place in a single stage with the rubber polymer, carbon black and pre-coupled silica first being mixed, followed by the addition of the oil and then the activators, processing and protective agents such as anti-oxidants, with the vulcanisation agent and accelerators added last. The discharge temperature from the blender is preferably as indicated above about 110°C to 120°C or 125°C.

Where the silica and coupling agent are added separately to the composition, the mechanical blending may take place in a two-stage operation. In the first stage the rubber polymer, silica, coupling agent and carbon black are mixed, followed by the addition of the oil and then the activators, processing aids and protective agents. The discharge temperature may be about 125°C to 130° for this first stage.

In the second stage the vulcanisation agent and accelerators are added and a lower discharge temperature, e.g. 105°C, is used.

Motor cycle and car tyres having treads according to the invention have been found to have improved wet grip over conventionally formulated high performance tyres.

The invention is now further illustrated in the following Examples in which viscoelastic properties were measured as follows:

Pre-tension: 10%.

Dynamic Strain: 0.5% (Double Strain Application).

Frequency: 10Hz.

Parameters: Complex Modulus $E^*$.

Dynamic Moculus $E_1$.

Loss Modulus $E_2$.

Loss Tangent (Tan $\delta$) $E_2/E_1$.

Loss Compliance (LC) $E_2/(E^*)^2$.

Example 1

A tyre tread composition suitable for a high performance tyre was formulated as follows:-

|  | Parts by Weight |
|---|---|
| Emulsion-polymerised SBR rubber | 137.5 |
| Carbon black | 12.38 |
| Silica | 91.44 |
| Coupling agent | 16.50 |
| Aromatic oil (D) | 77.00 |
| Zinc oxide | 4.13 |
| Stearic acid | 1.38 |
| Anti-oxidants | 4.13 |
| Processing aid | 2.75 |
| Paraffin wax | 1.38 |
| Accelerator | 3.58 |
| Sulphur | 1.38 |
| FOOTNOTE<br>The SBR rubber contained 40% styrene and was oil-extended containing 37.5 parts of oil and 100 parts of rubber. | |

The silica had a precipitated surface area of 175m$^2$/g marketed as Ultrasil VN3 by Degussa AG (Frankfurt, Germany).

The coupling agent was Bis(3-triethoxysilylpropyl)-tetrasulphide admixed 50:50 with N330 carbon black, which is marketed as X-50S by Degussa AG (Frankfurt, Germany).

The aromatic oil (D) had an S.G. of 0.97 and a viscosity (100°C) of 55 cst.

The composition was blended in a two stage process with the rubber polymer, fillers and coupling agent first blended, followed by the oil and then by the activators and protective agents with a discharge temperature of about 125°C. In the second stage, the accelerator and vulcanisation agent were added to the composition and mixed in with a final discharge temperature of about 105°C.

Tyres were moulded having treads formed from this blended composition, the vulcanisation of the tread being carried out at about 170°C.

A standard wet grip tread pattern to a depth of 6mm was formed in the tread of each tyre.

The tyres were then tested in a controlled wet test, a set being fitted to a sports car and compared in the same wet conditions with a set of conventional wet grip tyres having the same tread pattern and depth, the same tyre size and construction and the same tread compound composition except that carbon black was used as the sole reinforcing filler, i.e. in place of the silica and coupling agent.

Times for a standard test course on the tyres of the invention were markedly faster than on the conventional tyres as shown by the following average times.

Invention 1m 14.78s

Conventional 1m 16.14s.

Further driver tests were carried out in wet conditions and were compared with a similar set of conventional tyres. Again, times were consistently faster on the tyres of the invention, the fastest on standard tyres being 1m 10.60s and the fastest on the tyres of the invention being 1m 09.82s.

Driver reaction was particularly favourable with noticeable improvements for the tyres of the invention in braking, turning and, particularly, traction performance.

As indicated above, viscoelastic properties were also measured in the laboratory on the cured compositions with the following results:

|  | Example 1 | Conventional Compound |
|---|---|---|
| Tan $\delta$ at 0°C | 0.48 | 0.42 |

These data confirm the tyre test results in that Tan $\delta$ at 0°C (commonly used as an indicator of grip) is higher in the example compound than in the conventional reference compound.

Example 2

A tyre tread composition suitable for a high performance tyre was formulated as follows:-

|  | Parts by Weight |
|---|---|
| Emulsion polymerised SBR rubber | 137.5 |
| Carbon black | 16.16 |
| Coupled silica | 93.84 |
| Aromatic oil | 77.00 |
| Zinc oxide | 4.13 |
| Stearic acid | 1.38 |
| Anti-oxidant | 4.13 |
| Processing aid | 2.75 |
| Paraffin wax | 1.38 |
| Accelerator | 3.58 |
| Sulphur | 1.38 |
| FOOTNOTE<br>The SBR rubber contained 40% styrene and was oil-extended containing 37.5 parts of oil and 100 parts of rubber. | |

The coupled silica, surface area $175m^2/g$, was pre-reacted with 11.3% bis(triethoxy-silyl propyl)-tetrasulphide, which is marketed by Degussa AG (Frankfurt, Germany) as Coupsil 8113.

The aromatic oil was as used in Example 1.

The composition was blended in a single stage process, the rubber polymer, carbon black and pre-coupled silica first being mixed, followed by the addition of the oil and then the activators, processing and protective aids with the vulcanisation agent and accelerator added last. The discharge temperature from the blender was about 105°C.

Tyres were moulded having treads formed from this blended composition, the vulcanisation of the treads being carried out at about 170°C.

A tread pattern as in Example 1 was formed in each tread.

The tyres were then tested on a wet test track, a set being fitted to a high performance car and compared, as in Example 1, with a set of conventional wet grip tyres.

Lap times achieved on the tyres of the invention were again markedly faster than on the conventional tyres as shown by the following average times:

Invention 1m 14.67s

Conventional 1m 16.14s.

Example 3

A further tyre tread composition of the invention (Example 3B)and a comparable conventional composition (Example 3A) were formulated as follows:

|  | 3A | 3B |
| --- | --- | --- |
| SSBR (A) | 68.75 | 68.75 |
| SSBR (B) | 72.00 | 72.00 |
| Carbon Black (C) | 135.2 | - |
| Silica | - | 135.2 |
| Coupling Agent | - | 21.7 |
| Aromatic Oil (D) | 92.9 | 92.9 |
| Paraffin Wax | 1.4 | 1.4 |
| Anti Oxidants | 4.2 | 4.2 |
| Processing Aid | 4.2 | 4.2 |
| Zinc Oxide | 4.2 | 4.2 |
| Stearic Acid | 1.4 | 1.4 |
| Sulphur | 1.4 | 1.4 |
| Accelerator (CBS) | 2.8 | 2.8 |

FOOTNOTE

SSBR (A)  =  Solution-polymerised SBR, Styrene 40%, extended with 44phr aromatic oil.

SSBR (B)  =  Solution-polymerised SBR, Styrene 31%, extended with 37.5phr aromatic oil.

Carbon Black (C)  =  Surface area by Iodine Adsorption 160mg/g.

Aromatic Oil (D)  =  SG 0.97, Viscosity ($100^{\circ}$C) 55cst.

CBS  =  N-Cyclohexyl benzthiazole sulphenamide.

The silica and coupling agent were as in Example 1.

The compositions were mixed as in Example 1.

The mixed compositions were then cured for 20 minutes at $165^{\circ}$C and were tested as above for various physical properties as detailed below.

| Viscoelastic Properties | | | | |
|---|---|---|---|---|
| | | | 3A | 3B |
| $0^{\circ}$C | $E_1$ | MPa | 63.3 | 35.3 |
| | $E_2$ | MPa | 25.2 | 20.3 |
| | Tan $\delta$ | | 0.40 | 0.57 |
| | LC | $(GPa)^{-1}$ | 5.4 | 12.2 |
| $50^{\circ}$C | $E_1$ | MPa | 11.1 | 6.9 |
| | $E_2$ | MPa | 3.1 | 1.5 |
| | Tan $\delta$ | | 0.28 | 0.22 |
| | LC | $(GPa)^{-1}$ | 23.0 | 30.0 |

Observations

The use of silica in place of carbon black provides a beneficial balance of high tan $\delta$ at $0^{\circ}$C (for good grip) and low Tan $\delta$ at $50^{\circ}$C (for low rolling resistance).

**Claims**

1. A vulcanisable rubber composition suitable for the manufacture of the tread of a high performance tyre, the composition comprising a styrene-butadiene rubber, oil, vulcanisation agent, filler and coupling agent, the filler comprising silica and the coupling agent being at least bi-functional whereby it can react with the silica and with the rubber polymer.

2. A vulcanisable rubber composition according to Claim 1, wherein the coupling agent is pre-coupled with silica before incorporation in the composition.

3. A vulcanisable rubber composition according to Claim 1 or 2, wherein the styrene-butadiene rubber is present in the composition in an amount of at least 25% by weight of the total rubber constituents of the composition.

4. A vulcanisable rubber composition according to Claim 1, 2 or 3, wherein the styrene-butadiene rubber is an emulsion-polymerised rubber.

5. A vulcanisable rubber composition according to any preceding claim, wherein the silica is present in an amount of from 15 to 160 parts, preferably 30 to 120 parts, by weight per hundred parts of the rubber.

6. A vulcanisable rubber composition according to Claim 5, wherein the silica is present in an amount of from 30 to 80 parts per hundred parts of the rubber.

7. A vulcanisable rubber composition according to any preceding claim, wherein carbon black is additionally included as a filler and the total amount of filler is from 40 to 160 parts by weight per hundred parts of the rubber.

8. A vulcanisable rubber composition according to any preceding claim, wherein the oil is an aromatic oil and is present in an amount of at least 40 parts by weight per hundred parts of rubber.

9. A vulcanisable rubber composition according to Claim 8, wherein the oil is present in an amount of from 60 to 80 parts by weight per hundred parts of rubber.

10. A vulcanisable rubber composition according to Claim 8 or 9, wherein the oil has a specific gravity of from 0.95 to 1.0.

11. A vulcanisable rubber composition according to any preceding claim, wherein the coupling agent is a silane or a zirconate.

12. A vulcanisable rubber composition according to Claim 11, wherein the coupling agent is bis(3-triethoxy-silyl propyl)-tetrasulphide, mercapto propyl triethoxy silane, vinyl triethoxy silane or thiocyanato triethoxy silane.

13. A vulcanisable rubber composition according to Claim 11, wherein the coupling agent is zirconium dineoalkanato di(3 mercapto) propianato-0.

14. A vulcanisable rubber composition according to any preceding claim, in which the silica is a pre-coupled silica having a surface area of from 60 to 300 $m^2/g$.

15. A vulcanisable rubber composition according to any preceding claim, in which the coupling agent is used in an amount of from 2 to 20 per cent, preferably 5 to 15 per cent, by weight of the silica filler.

16. A vulcanisable rubber composition according to any preceding claim, wherein the blending of the composition has been carried out at below 130°C.

17. A vulcanised rubber composition formed by the vulcanisation of a composition of any one of the preceding claims.

18. A tyre having a tread formed by the vulcanisation of a composition of any one of the preceding claims.

European Patent Office

EUROPEAN SEARCH REPORT

Application Number

EP 94 30 6181

## DOCUMENTS CONSIDERED TO BE RELEVANT

| Category | Citation of document with indication, where appropriate, of relevant passages | Relevant to claim | CLASSIFICATION OF THE APPLICATION |
|---|---|---|---|
| X | US-A-3 938 574 (K.BURMESTER ET AL.)<br><br>* column 5, line 21 - line 55; claims 1,9,15 *<br>--- | 1-12, 14-18 | C08K5/54<br>C08K5/37<br>C08K3/36<br>B60C1/00<br>C08L9/06 |
| X | EP-A-0 524 339 (THE GOODYEAR TIRE & COMPANY)<br><br>* page 8, line 11; claims 1,9 *<br>* page 8, line 16 - line 23 *<br>--- | 1-7, 10-12, 14-18 | |
| E | EP-A-0 620 250 (THE GOODYEAR TIRE & RUBBER COMPANY)<br><br>* page 4, line 45 - line 46; claims *<br>--- | 1,3-8, 12,14, 15,17,18 | |
| E | EP-A-0 623 650 (THE GOODYEAR TIRE % RUBBER COMPANY)<br><br>* page 4, line 53 - line 55; claims *<br>----- | 1,3-8, 12,14, 15,17,18 | |

| | | | TECHNICAL FIELDS SEARCHED (Int.CL.6) |
|---|---|---|---|
| | | | C08K<br>B60C |

The present search report has been drawn up for all claims

| Place of search | Date of completion of the search | Examiner |
|---|---|---|
| THE HAGUE | 16 January 1995 | Van Humbeeck, F |

EPO FORM 1503 03.82 (P04C01)